(19) **Europäisches Patentamt**

**European Patent Office**

**Office européen des brevets**

(11) **EP 0 550 956 B1**

(12) **EUROPEAN PATENT SPECIFICATION**

(45) Date of publication and mention
of the grant of the patent:
**15.07.1998  Bulletin 1998/29**

(51) Int Cl.6: **G02F 1/1335**

(21) Application number: **92310107.5**

(22) Date of filing: **04.11.1992**

(54) **Apparatus for lighting liquid crystal**

Vorrichtung zur Flüssigkristallbeleuchtung

Dispositif d'éclairage de cristal liquide

(84) Designated Contracting States:
**DE FR GB NL**

(30) Priority: **11.12.1991  JP 327580/91**

(43) Date of publication of application:
**14.07.1993  Bulletin 1993/28**

(73) Proprietor: **SHARP KABUSHIKI KAISHA
Osaka-shi, Osaka-fu 545 (JP)**

(72) Inventors:
• **Teragawa, Daisuke
  Tenri-shi, Nara (JP)**
• **Takahashi, Nobuyuki
  Kawachinagano-shi, Osaka (JP)**

• **Okano, Masanobu
  Yamabe-gun, Nara (JP)**

(74) Representative: **Brown, Kenneth Richard et al
R.G.C. Jenkins & Co.
26 Caxton Street
London SW1H 0RJ (GB)**

(56) References cited:
**DE-A- 3 546 005**

• **PATENT ABSTRACTS OF JAPAN vol. 14, no. 280
(C-729)18 June 1990 & JP-A-2 086 684
( TOSHIBA ) 27 March 1990**

**Description**

BACKGROUND OF THE INVENTION

Field of the Invention

The present invention relates to apparatus for lighting liquid crystal and more particularly to a liquid crystal lighting apparatus used for backlighting of a transmission type color liquid crystal display device.

Description of the Prior Art

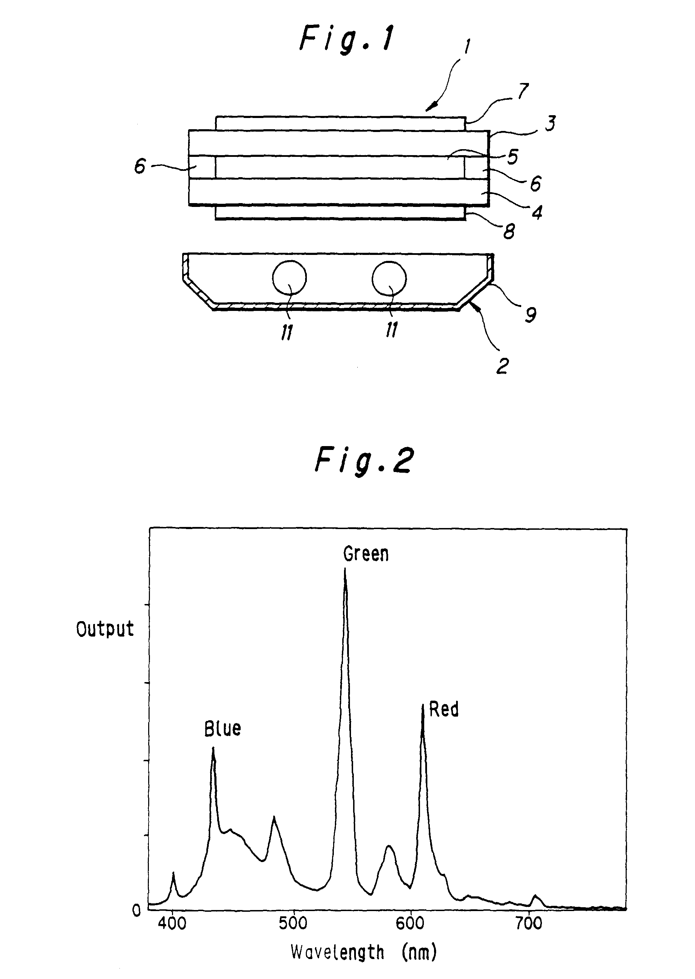

Generally, as shown in Fig.1, a color liquid crystal display device comprises a liquid crystal display panel 1 and a lighting apparatus 2 for backlighting of the liquid crystal display panel 1.

Of them, the liquid crystal display panel 1 with transparent electrodes formed on transparent glass substrates includes, as shown in Fig.1, glass substrates 3 and 4, a liquid crystal 5 serving as a light transmission/light shielding material, a sealant 6 for the liquid crystal 5 and polarizer plates 7 and 8.

On the other hand, the lighting apparatus 2 has light sources 11 housed in a reflector case 9 and in general, used as the light source 11 is a tubular light source, especially, a fluorescent lamp which luminesces light of three wavelength bands, from the standpoint of lamp efficiency. Namely, the inner circumferential surface of a tube is provided with a fluorescent material for blue color (blue fluorescent material), a fluorescent material for green color (green fluorescent material) and a fluorescent material for red color (red fluorescent material).

It has hitherto been practice to use $(SrCaBaMg)_5(PO_4)_3Cl:Eu$ as the blue fluorescent material, $LaPO_4:Ce$, Tb as the green fluorescent material and $Y_2O_3:Eu$ as the red fluorescent material. Fig.2 illustrates a luminescent spectrum of a conventional tubular light source 11. As shown therein, the conventional light source exhibits sharp peak values at respective wavelength bands of three colors.

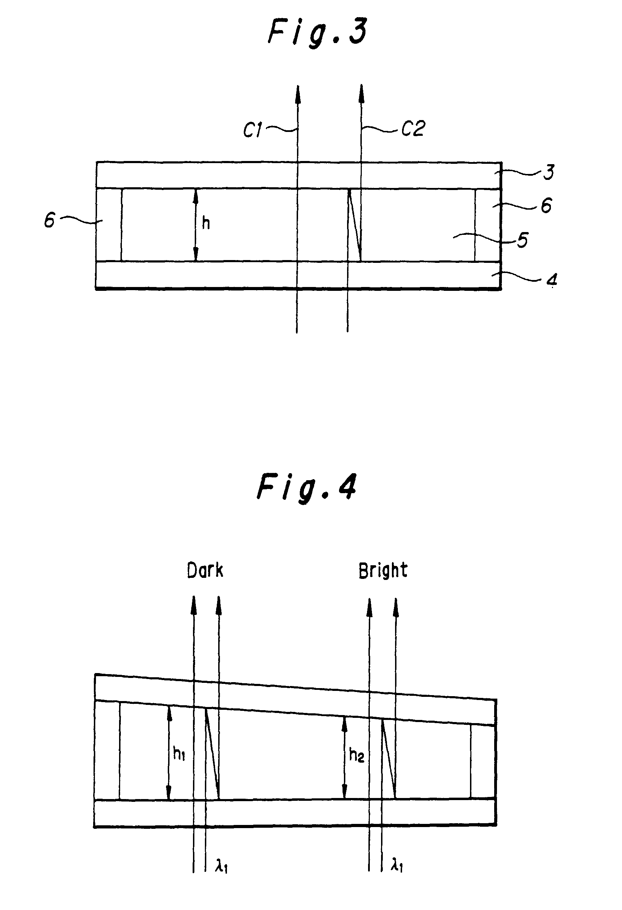

Generally, as shown in Fig.3, the liquid crystal display panel 1 has the paired glass substrates 3 and 4 and in the liquid crystal display device, direct light C1 from the light source 11 of lighting apparatus 2 interferes with light C2 which is reflected at the glass substrates 3 and 4 and then heads frontwards.

If a spectral waveform of the reflection light C2 is brought into complete coincidence with that of the direct light C1 by adjusting a length h of a gap between the two glass substrates 3 and 4, they can interfere with each other uniformly over the display plane to prevent irregularity in interference. Practically, however, wavelengths in the spectrum are short and as shown in Fig.4, it is difficult to make the gap length h between the two glass substrates 3 and 4 remain at substantially the same value sufficient to eliminate the interference irregularity. Thus, the gap length h usually differs for different sites on the plane, taking different values $h_1$ and $h_2$.

Light from the tubular light source 11 has a luminescent spectrum approximating a line spectrum as shown in Fig. 2 and therefore, under the aforementioned circumstances, one spectrum wave and another spectrum wave interfere with each other when phases of the spectrum waves coincide with each other (bright state) but they do not when their phases do not coincide (dark state). The coincidence and non-coincidence are correlated to the gap lengths $h_1$ and $h_2$ between the glass substrates 3 and 4 at the two sites, as described previously. More specifically, where light from the tubular light source 11 has a wavelength $\lambda_1$, the liquid crystal has a refractive index $n_{LC}$ and N is an optional integer, the dark state occurs when

$$2h_1 = \{(2N+1)/2\} \cdot \lambda_1/n_{LC}$$

stands and the bright state occurs when

$$2h_2 = N \cdot \lambda_1/n_{LC}$$

stands.

Because of the presence of the different gaps $h_1$ and $h_2$, the two states, bright and dark, take place on the display plane to cause irregularity in brightness, thereby degrading quality of display.

Means for suppressing the occurrence of irregularity in color attributable to irregularity in interference has been proposed in, for example, Japanese Patent Application Laid-open No. Hei 2-68518. According to the proposed technique, two glass substrates corresponding to the glass substrates 3 and 4 in Fig. 1 are changed in thickness or refractive index to make optical path lengths in the respective glass substrates different so that irregularity in interference of light may develop in the form of two different patterns which mutually cancel out to suppress irregularity in color. This countermeasure is considered to be, in its own way, effective color irregularity reducing means. In putting it into practice, however, a plurality of glass substrates having different thicknesses or refractive indexes must be prepared and consequently the number of parts used for production of a lighting apparatus is inevitably increased.

SUMMARY OF THE INVENTION

The present invention aims to eliminate the aforementioned problems and it is an object of the invention to provide a liquid crystal lighting apparatus which can reduce irregularity in interference to improve quality of display.

Accordingly, the present invention provides the liquid crystal lighting apparatus defined by claim 1, whose preamble reflects the state of the art according to DE-A-35 46 005. The sub-claims 2 to 5 are directed to embodiments of the invention.

In the apparatus of the invention, when light from the light source is incident on the back of the liquid crystal display panel, the incident light behaves partly as direct light which passes through the liquid crystal display panel and partly as reflection light which is reflected at front and rear surfaces of the liquid crystal display panel so as to reciprocate inside the display panel and heads frontwards so as to join the direct light.

At that time, in respect of light of a specified wavelength $\lambda_1$, optical interference occurs between reflection light and direct light. But, thanks to the half-width of respective spectra from the light source which is set to be 10nm or more, wavelengths of light $\lambda_2$ to $\lambda_m$ different from the above wavelength $\lambda_1$ are coexistent therewith and the occurrence of interference can be prevented in respect of the different wavelengths of light.

BRIEF DESCRIPTION OF THE DRAWINGS

Fig. 1 is a sectional diagram showing a liquid crystal display device using a general liquid crystal lighting apparatus.

Fig. 2 is a graph showing a spectral characteristic of a conventional tubular light source.

Fig. 3 is a schematic diagram showing fundamental optical paths in a general liquid crystal display panel.

Fig.4 is a schematic diagram of optical paths showing the state in which irregurality in gap between the front and rear surfaces of the liquid crystal display panel occurs.

Fig.5 is a graphical representation useful to show the concept of each wavelength band of light in the conventional tubular light source.

Fig.6 is a schematic diagram showing optical paths in the liquid crystal display device used in combination with an embodiment of a liquid crystal lighting apparatus according to the invention.

Fig.7 is a graphical representation useful to show the concept of each wavelength band of light in a tubular light source according to the invention.

Fig.8 is a graph showing a spectral characteristic of an embodiment of a tubular light source according to the invention.

DESCRIPTION OF PREFERRED EMBODIMENTS

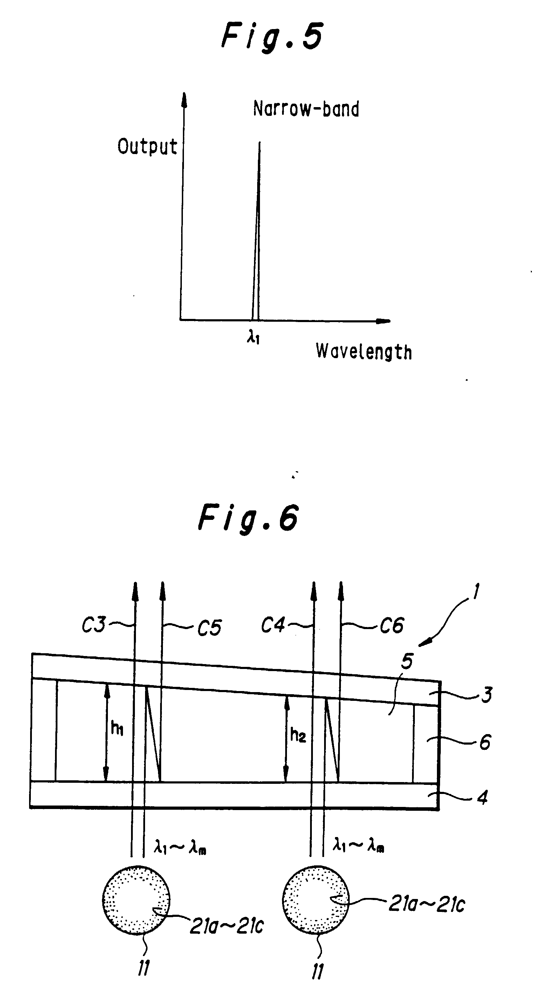

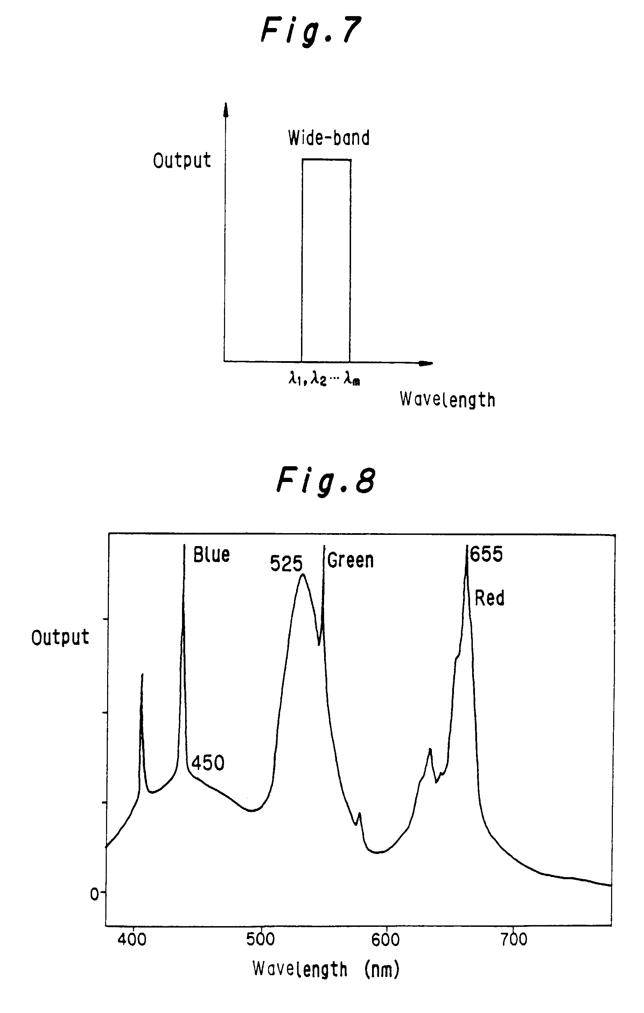

Fig.6 is a schematic diagram showing optical paths in a liquid crystal display device used in combination with a liquid crystal lighting apparatus according to an embodiment of the invention, Fig.7 is a conceptual diagram showing a wavelength band of light illustrated in Fig.6, and Fig.8 is a graph showing a spectral characteristic of the tubular light source. In these figures, members like those in the prior art shown in Figs.1, 3 and 4 having the same function are designated by the same reference numerals.

As shown, the liquid crystal lighting apparatus according to the present embodiment is used for an LCD (liquid crystal display device) module of a color TFT (thin film transistor) and it comprises tubular light sources 11 for backlighting of a liquid crystal display panel 1. From the standpoint of lamp efficiency, a fluorescent lamp which luminesces light of three wavelength bands is used as the tubular light source 11, having its tube inner circumferential surface coated with coexistent blue, green and red color fluorescent materials 21a, 21b and 21c.

As the blue fluorescent material 21a, a fluorescent material having a composition substance containing strontium phosphate such as $3Sr_3(PO_4)_2 \cdot SrCl_2$ or $Cacl_2$ added with $Eu^{2+}$ serving as activator, a fluorescent material having $BaMg_2Al_{16}O_{27}$ added with $Eu^{2+}$ serving as activator or a fluorescent material having a zinc compound such as ZnS added with Ag serving as activator is used to provide a spectral characteristic near a wavelength of 450nm.

As the green fluorescent material 21b, a fluorescent material having a zinc compound such as ZnS or $Zn_2SiO_4$ added with Mn or Cu serving as activator, a fluorescent material having $Y_2SiO_5$:Ce, $LaPO_4$:Tb, $(Ce,Tb)MgAl_{11}O_{19}$, $Y_3Al_5O_{12}$:Ce, CaS:Ce, $Gd_2O_2S$:Tb or $Ld_2O_2S$:Tb which corresponds to the immediately above-described fluorescent material added with Ce or Tb in place of Mn or Cu serving as activator or a fluorescent material having a mixture of various composition substances for high brightness is used to provide a spectral characteristic near a wavelength of 525nm.

As the red fluorescent material 21c, a fluorescent material having a Mg compound such as $3.5MgO \cdot 0.5MgF_2 \cdot GeO_2$ added with Mn serving as activator, a fluorescent material having a phosphoric acid compound such as $(Zn,Mg)_3(PO_4)_2$ added with Mn serving as activator, a fluorescent material having a compound of $Cd_2B_2O_5$ added with Mn serving as activator or a compound in which Cd in $Cd_2B_2O_5$ is replaced with Zn, Hg, Mg, Ca, Sr or the like metal and which is added with Mn serving as activator, a fluorescent material having yttrium oxide such as $Y_2O_3$ or $Y_2O_2S$ added with Eu serving as activator or a fluorescent material having $(Sr,Mg, Ba)_3PO_2$ added with Sn serving as activator is used to provide a spectral characteristic near a wavelength of 655nm.

The indication (Ce,Tb), (En,Mg) or (Sr,Mg,Ba) used to describe the above fluorescent materials signifies that any of the elements in the parenthesis may be contained.

By using the above fluorescent materials, each of the three wavelength bands of blue, green and red in the luminescent spectrum of the tubular light source 11 is broadened as shown in Fig.8. Specifically, the spectrum of each fluorescent material has a half-width of 10nm or more. The half-width being 10nm or more is sufficient to relieve irregularity in interference as will be described later and conversely the half-width not being greater than 10nm is insufficient to mitigate irregularity in interference. Accordingly, the occurrence of irregularity in interference can be prevented by making the respective fluorescent materials 21a to 21c have the constituent substances described as above. It is to be noted that in Fig.8, the state resembles a line spectral characteristic around 450nm, exhibiting two peaks, which peaks are luminescent spectra generated from mercury (Hg) necessary for the fluorescent lamp and have no relation to a spectrum of the blue fluorescent material 21a. In other words, the blue fluorescent material 21a has a spectral characteristic which is represented by a gently-sloping curve removed of the two peaks around 450nm in Fig.8 and which has a half-width of about 80nm. The green fluorescent material 21b is designed to have a half-width of about 35nm and the red fluorescent material 21c is set to have a half-width of about 15nm.

In the liquid crystal display device using the liquid crystal lighting apparatus constructed as above, light emitting from the tubular light sources 11 passes through a rear glass substrate 4 and enters a liquid crystal display panel 1 as shown in Fig.6. The incident light partly behaves as direct light C3, C4 which passes through a front glass substrate 3 and partly behaves as reflection light C5, C6 which is reflected at the glass substrates 3 and 4 so as to reciprocate in liquid crystal 5 and then heads frontwards so as to join the direct light C3,C4.

Where h represents the gap between the glass substrates 3 and 4 filled with liquid crystal 5, $\lambda$ represents the spectrum (wavelength) of direct light and reflection light, $n_{LC}$ represents the refractive index of the liquid crystal and N represents an optional integer, the dark state takes place when

$$2h = \{(2N+1)/2\} \cdot \lambda/n_{LC}$$

stands and when

$$2h = N \cdot \lambda/n_{LC}$$

stands, there results the bright state.

In the above construction, it is difficult to keep the gap h completely constant over the display plane area from the standpoint of fabrication accuracy and therefore the optical path length for light C5 differs from that for light C6, causing a difference in phase of light. Consequently, the reflection light C5 joins the direct light C3 to produce the dark state and the reflection light C6 joins the direct light C4 to produce the bright state, causing dark and bright irregularity in interference on the screen. If a tubular light source 11 exhibiting a luminescent spectrum approximating a line spectrum as shown in Fig.5 is used, irregularity in interference which is excessively clear will be observed. In the present embodiment, however, the band of a spectrum of the tubular light source 11 is relatively broad as shown in Fig.7 and hence irregularity in interference can be relieved. This will be detailed hereinafter. It is now assumed that as shown in Fig.6, at a site where the gap between the glass substrates 3 and 4 of liquid crystal display panel 1 is $h_1$, a wavelength $\lambda_1$ of light meets

$$2h_1 = \{(2N+1)/2\} \cdot \lambda_1/n_{LC}$$

to produce the dark state at the site. Then, irregurality in interference takes place between $\lambda_1$ of light at the site and $\lambda_1$ of light at a different site which is slightly distant from that site and at which the gap h is different from $h_1$.

But, in effect, wavelengths $\lambda_2$, $\lambda_3$, $\cdots\cdots \lambda_m$ of light which are different from $\lambda_1$ also develop at that site and for these different wavelengths,

$$2h_1 \neq \{(2N+1)/2\} \cdot (\lambda_2)/ n_{LC}$$

$$2h_1 \neq \{(2N+1)/2\} \cdot (\lambda_3)/ n_{LC}$$

$$.$$

$$.$$

$$2h_1 \neq \{(2N+1)/2\} \cdot (\lambda_m)/ n_{LC}$$

stand. Thus, each of the wavelengths $\lambda_2$, $\lambda_3$, ······ $\lambda_m$ of light interferes with its own wavelength in a manner different from the way that the wavelength $\lambda_1$ of light interferes with its own wavelength.

Where $\alpha_1$, ····· $\alpha_m$, $\beta$ (m being integer) represent optional constants and $\alpha_1 > \beta > 0$ stands, optical outputs A and B at the two sites are given by

$$\text{optical output A} = \alpha_1 \lambda_1 + \alpha_2 \lambda_2 + \cdots + \alpha_m \lambda_m$$

$$\text{optical output B} = \beta \lambda_1 + \alpha_2 \lambda_2 + \cdots + \alpha_m \lambda_m$$

and the greater the number of m, the more the output A approximates the output B, thus ensuring that the dark state can be averaged as a whole to reduce irregularity in interference to a level which is inappreciable to the user.

On the other hand, at a site where the gap is $h_2$, $\lambda_1$ meets

$$2h_2 = N \cdot \lambda_1 / n_{LC}$$

to produce the bright state but for wavelengths $\lambda_2$, $\lambda_3$, ······ $\lambda_m$ of light which are different from $\lambda_1$,

$$2h_2 \neq N \cdot (\lambda_2)/ n_{LC}$$

$$2h_2 \neq N \cdot (\lambda_3)/ n_{LC}$$

$$.$$

$$.$$

$$2h_2 \neq N \cdot (\lambda_m)/ n_{LC}$$

stand. Thus, each of the wavelengths $\lambda_2$, $\lambda_3$, ······ $\lambda_m$ of light interferes with its own wavelength in a manner different from the way that the wavelength $\lambda_1$ of light interferes with its own wavelength. Therefore, the bright state can be averaged as in the case of the site of gap $h_1$ to reduce irregularity interference. Experimental results demonstrated that irregularity in interference could be reduced significantly in, especially, the region of a relatively long wavelength of green or red.

The present invention is in no way limited to the foregoing embodiment and within the framework of the invention, the foregoing embodiment may be modified or changed in various ways.

For example, the foregoing embodiment has been described as being applied to a system composed of the LCD module of color TFT and the backlighting apparatus but the invention is not limited thereto.

The luminescent spectrum of the tubular lamp serving as light source may also have a spectrum resembling the three wavelength bands of the foregoing embodiment and obviously, in this case, substances of respective fluorescent materials are not limited to those of the foregoing embodiment.

As is clear from the foregoing description, according to the present invention, the half-width of spectrum of each fluorescent material of the tubular light source is set to be 10nm or more and therefore various wavelengths of light can be coexistent, and bright and dark states of brightness can be averaged when the gap length between the front and rear glass substrates of the liquid crystal display panel is not completely uniform. As a result, irregularity in interference can be suppressed over the entire display plane and a liquid crystal display system of high display quality can be provided.

## Claims

1. A liquid crystal lighting apparatus, comprising a light source (11) for backlighting of a liquid crystal display panel (1) and having a blue fluorescent material (21a), a green fluorescent material (21b) and a red fluorescent material (21c), wherein the blue fluorescent material (21a) exhibits an emission spectrum having a half-width which is 10nm or more, characterized in that the green and red fluorescent materials (21b,21c) also each exhibit an emission spectrum having a half-width which is 10nm or more.

2. A liquid crystal lighting apparatus according to claim 1, wherein said blue fluorescent material (21a) is a fluorescent material having a composition substance containing strontium phosphate added with $Eu^{2+}$ serving as activator, a fluorescent material having $BaMg_2Al_{16}O_{27}$ added with $Eu^{2+}$ serving as activator, or a fluorescent material having a zinc compound added with Ag serving as activator.

3. A liquid crystal lighting apparatus according to claim 1, wherein said green fluorescent material (21b) is a fluorescent material having a zinc compound added with Mn or Cu serving as activator, or a fluorescent material having $Y_2SiO_5$:Ce, $LaPO_4$:Tb, (Ce,Tb) $MgAl_{11}O_{19}$, $Y_3Al_5O_{12}$:Ce, CaS:Ce, $Gd_2O_2S$:Tb or $Ld_2O_2S$:Tb added with Ce or Tb serving as activator.

4. A liquid crystal lighting apparatus according to claim 1, wherein said red fluorescent material (21c) is a fluorescent material having a Mg compound added with Mn serving as activator, a fluorescent material having a phosphoric acid compound added with Mn serving as activator, a fluorescent material having a compound of $Cd_2B_2O_5$ added with Mn serving as activator or a compound in which Cd in $Cd_2B_2O_5$ is replaced with Zn, Hg, Mg, Ca, Sr or the like metal and which is added with Mn serving as activator, a fluorescent material having yttrium oxide added with Eu serving as activator, or a fluorescent material having $(Sr,Mg,Ba)_3PO_2$ added with Sn serving as activator.

5. A liquid crystal lighting apparatus according to claim 1, comprising blue, green and red fluorescent materials (21a-21c) according to claims 2 to 4 respectively.

## Patentansprüche

1. Flüssigkristall-Beleuchtungsvorrichtung mit einer Lichtquelle (11) zur Hintergrundbeleuchtung einer Flüssigkristalldisplay-Tafel (1), und mit einem blauen Fluoreszenzmaterial (21a), einem grünen Fluoreszenzmaterial (21b) und einem roten Fluoreszenzmaterial (21c), wobei das blaue Fluoreszenzmaterial (21a) ein Emissionsspektrum mit einer Halbwertsbreite zeigt, die 10 nm oder mehr beträgt, **dadurch gekennzeichnet,** dass auch das grüne und das rote Fluoreszenzmaterial (21b, 21c) ein Emissionsspektrum mit einer Halbwertsbreite zeigen, die 10 nm oder mehr beträgt.

2. Flüssigkristall-Beleuchtungsvorrichtung nach Anspruch 1, bei der das blaue Fluoreszenzmaterial (21a) ein Fluoreszenzmaterial mit einer Zusammensetzungssubstanz ist, die Strontiumphosphat mit zugesetztem, als Aktivator dienendem $Eu^{2+}$ enthält, ein Fluoreszenzmaterial mit $BaMg_2Al_{16}O_{27}$ mit zugesetztem, als Aktivator dienendem $Eu^{2+}$ oder ein Fluoreszenzmaterial mit einer Zinkverbindung mit zugesetztem, als Aktivator dienendem Ag ist.

3. Flüssigkristall-Beleuchtungsvorrichtung nach Anspruch 1, bei der das grüne Fluoreszenzmaterial (21b) ein Fluoreszenzmaterial mit einer Zinkverbindung mit zugesetztem, als Aktivator dienendem Mn oder Cu ist, oder ein Fluoreszenzmaterial mit $Y_2SiO_5$:Ce, $LaPO_4$:Tb, (Ce,Tb)$MgAl_{11}O_{19}$, $Y_3Al_5O_{12}$:Ce, CaS:Ce, $Gd_2O_2S$:Tb oder $Ld_2O_2S$:Tb, mit zugesetztem, als Aktivator dienendem Ce oder Tb ist.

4. Flüssigkristall-Beleuchtungsvorrichtung nach Anspruch 1, bei der das rote Fluoreszenzmaterial (21c) ein Fluoreszenzmaterial mit einer Mg-Verbindung mit zugesetztem, als Aktivator dienendem Mn ist, ein Fluoreszenzmaterial mit einer Phosphorsäureverbindung mit zugesetztem, als Aktivator dienendem Mn, ein Fluoreszenzmaterial mit der Verbindung $Cd_2B_2O_5$ mit zugesetztem, als Aktivator dienendem Mn, oder eine Verbindung, bei der Cd in $Cd_2B_2O_5$ durch Zn, Hg, Mg, Ca, Sr oder ein ähnliches Material ersetzt ist, mit zugesetztem, als Aktivator dienendem Mn, ein Fluoreszenzmaterial mit Yttriumoxid mit zugesetzten, als Aktivator dienendem Eu, oder ein Fluoreszenz-

material (Sr,Mg,Ba)$_3$PO$_2$ mit zugesetztem, als Aktivator dienendem Sn ist.

5. Flüssigkristall-Beleuchtungsvorrichtung nach Anspruch 1, mit blauen, grünen und roten Fluoreszenzmaterialien (21a - 21c) nach dem jeweiligen der Ansprüche 2 bis 4.

**Revendications**

1. Dispositif d'éclairage à cristaux liquides comprenant une source de lumière (11) pour éclairer par l'arrière un panneau d'affichage à cristaux liquides (1) et comprenant une matière fluorescente bleue (21a), une matière fluorescente verte (21b) et une matière fluorescente rouge (21c), dans lequel la matière fluorescente bleue (21a) présente un spectre d'émission ayant une largeur de bande efficace de 10 nm ou plus, caractérisé en ce que les matières fluorescentes verte et rouge (21b, 21c) montrent chacune également un spectre d'émission ayant une largeur de bande efficace de 10 nm ou plus.

2. Dispositif d'éclairage à cristaux liquides selon la revendication 1, dans lequel ladite matière fluorescente bleue (21a) est une matière fluorescente comprenant une substance de composition contenant du phosphate de strontium additionné de Eu$^{2+}$ servant d'activateur, une matière fluorescente comprenant du BaMg$_2$Al$_{16}$O$_{27}$ additionné de Eu$^{2+}$ servant d'activateur, ou une matière fluorescente comprenant un composé de zinc additionné de Ag servant d'activateur.

3. Dispositif d'éclairage à cristaux liquides selon la revendication 1, dans lequel ladite matière fluorescente verte (21b) est une matière fluorescente comprenant un composé de zinc additionné de Mn ou de Cu servant d'activateur, ou une matière fluorescente comprenant du Y$_2$SiO$_5$:Ce, LaPO$_4$:Tb, (Ce, Tb)MgAl$_{11}$O$_{19}$, Y$_3$Al$_5$O$_{12}$:Ce, CaS:Ce, Gd$_2$O$_2$S:Tb ou Ld$_2$O$_2$S:Tb, additionné de Ce ou de Tb servant d'activateur.

4. Dispositif d'éclairage à cristaux liquides selon la revendication 1, dans lequel ladite matière fluorescente rouge (21c) est une matière fluorescente comprenant un composé de Mg additionné de Mn servant d'activateur, une matière fluorescente comprenant un composé d'acide phosphorique additionné de Mn servant d'activateur, une matière fluorescente comprenant un composé de Cd$_2$B$_2$O$_5$ additionné de Mn servant d'activateur ou un composé dans lequel le Cd dans Cd$_2$B2O$_5$ est remplacé par Zn, Hg, Mg, Ca, Sr ou un métal analogue et additionné de Mn servant d'activateur, une matière fluorescente comprenant de l'oxyde d'yttrium additionné de Eu servant d'activateur, ou une matière fluorescente comprenant du (Sr, Mg, Ba)$_3$PO$_2$ additionné de Sn servant d'activateur.

5. Dispositif d'éclairage à cristaux liquides selon la revendication 1, comprenant des matières fluorescentes bleue, verte et rouge (21a à 21c) respectivement selon les revendications 2 à 4.

# Fig.1

# Fig.2

# Fig. 3

# Fig. 4

# Fig.5

Narrow-band

Output

λ₁    Wavelength

# Fig.6

C3   C5   C4   C6   1

5

3

h₁   h₂

6

4

λ₁~λₘ   λ₁~λₘ

21a~21c

21a~21c

11   11

# Fig.7

# Fig.8